(19) Europäisches Patentamt European Patent Office Office européen des brevets

(11) **EP 4 343 680 A1**

(12) # EUROPEAN PATENT APPLICATION

(43) Date of publication:
**27.03.2024 Bulletin 2024/13**

(51) International Patent Classification (IPC):
***G06T 5/00*** *(2024.01)*

(21) Application number: **22206335.6**

(22) Date of filing: **09.11.2022**

(52) Cooperative Patent Classification (CPC):
**G06T 5/70;** G06T 2207/10132; G06T 2207/20076; G06T 2207/20084; G06T 2207/30048

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.09.2022 US 202263408524 P**

(71) Applicant: **Koninklijke Philips N.V.**
**5656 AG Eindhoven (NL)**

(72) Inventors:
 • **STEVENS, Tristan Segerus Walterus**
  **5656AG Eindhoven (NL)**

 • **VAN SLOUN, Ruud Johannes Gerardus**
  **5656AG Eindhoven (NL)**
 • **ROBERT, Jean-Luc Francois-Marie**
  **5656AG Eindhoven (NL)**
 • **MERAL, Faik Can**
  **5656AG Eindhoven (NL)**
 • **YU, Jason Richard**
  **5656AG Eindhoven (NL)**
 • **SHIN, Jun Seob**
  **5656AG Eindhoven (NL)**

(74) Representative: **Philips Intellectual Property & Standards**
**High Tech Campus 52**
**5656 AG Eindhoven (NL)**

(54) ## DE-NOISING DATA

(57)   A method is provided for de-noising data, comprising data of interest and a target correlated noise. The data is input into two models trained on the data of interest and on the target correlated noise separately. The data of interest can thus be estimated from the data and the outputs of the two separate models.

FIG. 1

**Description**

FIELD OF THE INVENTION

The invention relates to the field of de-noising data containing correlated noise. The invention also relates to de-noising medical images containing correlated noise.

BACKGROUND OF THE INVENTION

In cardiac ultrasound, multiple reverberations between the ribs and tissue generate strong correlated clutter that degrades the final image quality. This type of clutter is known as haze, which substantially lowers the contrast and limits visibility of finer detail in the resulting ultrasound image. This is especially problematic in cardiac ultrasound, where it is important to be able to distinctly image the ventricles, endocardium and apex of the heart. De-hazing is a specific technique used to suppress the haze found in ultrasound images and retrieve the underlying signal.

Clutter and haze generally do not follow a simple noise distribution, such as white or Gaussian noise, but are highly structured and correlated. Many algorithms that operate in the image domain struggle to separate haze from actual tissue and are unable to remove the haze without introducing artifacts or suppressing weakly reflected tissue images. Furthermore, many existing algorithms are largely unaware of the rich statistical structure in ultrasound signals and anatomical images.

Conventional methods used for de-noising or de-hazing images can be divided in two categories. Firstly, heuristic methods such as non-local mean (NLM) or block matching 3D (BM3D) assume simple noise statistics and fail to accurately retrieve the underlying signal from the correlated non-zero-mean haze. Secondly, data driven methods such as supervised deep learning networks (e.g., U-Net) can be trained to map hazy images to clean images in an end-to-end fashion. Even though this method tends to produce good results, it is not robust to changes in the data or noise distribution. This means that the de-noising performance will significantly drop if the network is applied to a different domain compared to that on which it has been trained. Furthermore, the supervised deep learning approach requires exact pairs of data (clean, noisy) for training, which are not always available.

SUMMARY OF THE INVENTION

The invention is defined by the claims.

According to examples in accordance with an aspect of the invention, there is provided a method for de-noising data comprising data of interest and a target correlated noise, the method comprising:

inputting the data into a first model trained on the data of interest;
inputting the data into a second score-based generative model trained on a target correlated noise expected to be present in the data; and
estimating the data of interest based on the data and the outputs of the first model and the second score-based generative model.

Estimating the data of interest comprises solving an inverse de-noising problem on the data. The inverse de-noising problem can be formulated based on the data being a combination of the data of interest and the target correlated noise. The inverse de-noising problem can be solved using a maximum a-posterior (MAP) estimation.

Often noisy data is expected to contain correlated noise. This may occur due to physical limitations when obtaining the data. For example, in cardiac ultrasound imaging, the ultrasound waves reverberate from the ribs causing highly correlated noise in the images. This type of noise, called haze, can be expected in cardiac ultrasound images.

Thus, it is proposed to use two models on the noisy data. The first model is trained on the data of interest (i.e. the values expected for the data) whilst the second score-based generative model is trained specifically on a target correlated noise which is expected to be present in the data. The target correlated noise is a type of noise which is correlated/structured and thus does not follow a conventional Gaussian distribution (i.e. it is not assumed to be random). The particular form of the correlated noise will depend on the type of data which is obtained and the sources of correlated noise.

The second score-based generative model enables an accurate prediction to be obtained of the correlated noise and an estimate the data of interest accordingly. This is because the second score-based generative model has been trained on the target correlated noise and does not assume the presence of only a Gaussian distributed noise in the data.

In essence, the first model is used to learn what the data of interest looks like and the second score-based generative model is used to learn what the target correlated noise looks like. This means that a prior can be used for both the data of interest and the target correlated noise, instead of only assuming the presence of random noise. It has been found that using both together significantly improves the de-noising process in data which contains a target correlated noise. Generative models have been found to be a powerful way of learning distributions in data using unsupervised learning. This enables the model(s) to be trained in an unsupervised manner which significantly simplifies the learning process of the models whilst still ensuring they are robust.

It has been realized that score-based models are particularly robust when learning correlated/structured noise without being relatively computationally expensive. The score-based models can be used in de-noising diffusion models to solve inverse de-noising problems. Score-based generative models used in de-noising diffusion models are sometimes referred to as score-based diffusion models.

The first model may also be a score-based generative model.

Estimating the data of interest comprises using the outputs of the first model and the second score-based generative model in a sampling algorithm configured to estimate the data of interest from the data by solving an inverse de-noising problem and applying the solution to the data.

Examples of sampling algorithms used for stochastic differential equations can be based on the Euler-Maruyama method or Langevin dynamics.

The data may be undersampled relative to the data of interest by a sampling matrix and the method may comprise transforming the data to a size of the data of interest.

Often the data received may be a noisy and undersampled version of the data of interest (e.g. compressed data). As such, one can transform the data to match the expected sample size of the data of interest. In particular, the data can be modelled as a sum of the data of interest, multiplied by a measurement matrix, with the correlated noise and, potentially, conventional Gaussian noise.

The sampling matrix further comprises one or more of subsampling functions, point-spread functions and blurring kernels.

The data may be image data. For example, the data may be ultrasound image data.

Ultrasound data has been found to comprise correlated noise. For example, haze (reverberation) is a common occurrence in cardiac ultrasound images. Haze is a highly correlated noise which can be dealt with using a model trained on ultrasound images containing haze. Of course, other types of correlated noise in ultrasound data could also be dealt with using models trained on each type (e.g. speckle etc.).

A plurality of first models may be applied to different depths of the ultrasound image data, wherein each first model is trained on the data of interest for a target depth in ultrasound image data.

Additionally, or alternatively, a plurality of second score-based generative models may be applied to different depths of the ultrasound image data, wherein each second score-based generative model is trained on a target correlated noise at a target depth expected to be present in ultrasound image data.

Ultrasound data contains information on the object (e.g. a person) being imaged with respect to depth. Noise statistics (particularly for correlated noise) can vary with respect to depth. As such, it may be advantageous to use different models, trained for different depths, on the different depths of the ultrasound data.

The invention also provides a computer program carrier comprising computer program code which, when executed on a processing system, cause the processing system to perform all of the steps of the afore-mentioned method.

The computer program carrier may be a long-term storage medium (e.g. hard drive) or a temporary carrier (e.g. a bitstream).

The invention also provides a system for de-noising data comprising data of interest and a target correlated noise, the system comprising a processor configured to:

    input the data into a first model trained on the data of interest;
    input the data into a second score-based generative model trained on a target correlated noise expected to be present in the data; and
    estimate the data of interest based on the data and the outputs of the first model and the second model.

The first model may also be a score-based generative model.

Estimating the data of interest may comprise using the outputs of the first model and the second score-based generative model in a sampling algorithm configured to estimate the data of interest from the data by solving an inverse de-noising problem and applying the solution to the data.

The data may be image data. For example, the data may be ultrasound image data.

A plurality of first models may be applied to different depths of the ultrasound image data, wherein each first model is trained on the data of interest for a target depth in ultrasound image data.

Additionally, or alternatively, a plurality of second score-based generative models may be applied to different depths of the ultrasound image data, wherein each second score-based generative model is trained on a target correlated noise at a target depth expected to be present in ultrasound image data.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Fig. 1 shows a flowchart for estimating the data of interest from noisy data;
Fig. 2 shows the results for the methods described herein on cardiac ultrasound data; and
Fig. 3 shows the results for the methods described herein on natural images.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method for de-noising data comprising data of interest and a target correlated noise. The data is input into two models trained on the data of interest and on the target correlated noise separately, where at least the model trained on the target correlated noise is a score-based generative model. The data of interest can thus be estimated from the data and the outputs of the two separate models.

The focus of the invention relies on the combination of separate models for the data of interest as well as the correlated noise. This combination means that the statistics of both distributions (i.e. the data of interest and the correlated noise) are learned using convolutional neural networks. More specifically, it is proposed to use score-based generative modeling to capture the prior distributions of the data of interest and the correlated noise. As will be shown below, a Bayesian formulation can then be used to draw samples from the posterior distribution, which is influenced by both prior distributions as well as the likelihood of the measurement.

Score-based generative models learn the gradients of log probability density functions $s(x) = \nabla_x logp(x)$ of a noise-perturbed prior distribution $p(x)$ during training. This quantity is often known as the (Stein) score function.

When both of the models use score-based networks, they can both be trained using score-matching in an unsupervised manner on "clean" images (e.g. ultrasound images) and data containing the target correlated noise (e.g. hazy ultrasound images) respectively. The training data does not however need to have matching underlying data. Although any network can be used for score-based modeling, U-Net type architectures have shown to be effective networks for score-based training. A RefineNet architecture has been used for the results discussed below.

In regard to the processing of ultrasound data, an algorithm using both models can be incorporated as a software addition to the post-processing pipeline of existing ultrasound devices. The algorithm can operate in the image domain, right after envelope detection of the beamsummed RF data. This means that the generative model priors are learned in the image domain and the de-noising task is performed in the same domain. However, it will be appreciated that the use of separate models is not limited to the image domain only, as will be discussed below.

The proposed score-based models are part of an unsupervised deep learning branch named generative models. These models are able to learn the underlying distribution of the data and therefore are able to express uncertainty about a certain measurement. Examples of generative models are generative adversarial networks (GAN), variational auto-encoders (VAE) and normalizing flows (NF). However, it has been found that these methods either require strong restrictions on the model architecture or involve unstable training processes. For example, NFs require specialized network architectures which are computationally and memory expensive. In contrast, score-based networks have been found to easily learn priors using score-matching and have achieved state-of-the-art performance on many downstream tasks and applications. Thus, score-based models can be seen as an improvement upon the aforementioned generative models. As such, it is proposed to use score-based models.

Most existing methods that tackle inverse problems using deep generative models assume the setting of additive Gaussian noise. As mentioned before, this assumption does not hold in the case of ultrasound de-hazing or, more generally, to the removal of correlated noise from measured/observed data. Normalizing flows (NF) have been used to perform maximum a-posteriori inference for dependent noise using an explicit generative model for the noise distribution. For example, see Whang, Lei, & Dimakis, 2021 Proceedings of the 38th International Conference on Machine Learning, PMLR 139, 2021, "Solving Inverse Problems with a Flow-based Noise Model".

However, NF require specialized network architectures which are computationally and memory expensive. In contrast, score-based networks have been found to easily learn priors using score-matching and have achieved state-of-the-art performance on many downstream tasks and applications.

Additionally, it is important to note that there are some key differences between generative methods that don't make it possible to just replace the models to solve the same problems.

Flow-based models are generally a more approachable solution as they can be used to calculate the likelihood of the data (and subsequently calculate the MAP solution). However, in this case, score-based models are used for the reasons mentioned above (i.e. faster, less complex and more flexible neural network architectures). In particular, flow-based models cannot trivially be replaced with score-based models when solving the inverse de-noising problem solved herein. This is because likelihood computation using score-based models, although possible, has not been found to be efficient (i.e. it takes very long). This issue is circumvented by adding the proximal gradient update steps $[s_\theta, s_\phi]$ from two separate score-based models to the sampler in order to take into account the likelihood of the measurements. The proximal gradient update steps $[s_\theta, s_\phi]$ are used for both the correlated noise and the data of interest. Thus, the inverse de-noising problem has to be reformulated - see equation (1) below.

Thus, the focus herein is on inverse problems, such as ultrasound de-hazing, where one seeks to retrieve an underlying signal (i.e. data of interest) from corrupted data containing a target correlated noise.

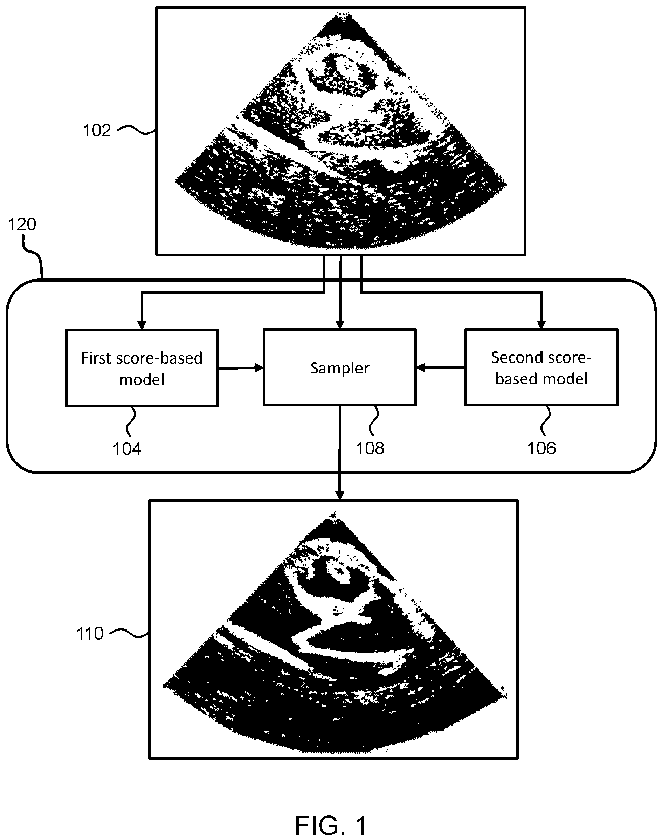

Fig. 1 shows a flowchart for estimating the data of interest 110 from noisy data 102. In this case, the observed, noisy, data 102 is an ultrasound image containing haze. Thus, a first score-based model 104 has been trained with clean ultrasound images and the second score-based model 106 has been trained with hazy ultrasound images. A sampler 108 is then used to solve the inverse de-noising problem (i.e. removing the correlated noise from the observed data).

The first and second models and the sampler are implemented in software, executed by a processor 120.

The inverse de-noising problem can be formulated as such:

$$y = x + h + n \qquad\qquad (1)$$

where $y$ is the measured signal, $x \sim p_x(\mathbf{x})$ is the data of interest (i.e. a clean ultrasound image, in this case), $h \sim p_H(\mathbf{h})$ is the target correlated noise (i.e. haze, in this case) and $n \sim \mathcal{N}(0, \sigma_n^2 I)$ is a Gaussian distributed noise component. $p_X(\mathbf{x})$ is the prior distribution of the data of interest modelled by the first score-based model 104 after being trained on the data of interest and $p_H(\mathbf{h})$ is the prior distribution modelled by the second score-based model 106 after being trained on the target correlated noise. Following the Bayesian framework, the maximum a-posteriori (MAP) solution is given by:

$$x = \underset{x}{argmax}\, p_{X \mid Y}(x \mid y)$$

$$\qquad\qquad (2)$$

$$= \underset{x}{argmin}\left\lVert y - (x + h)\right\rVert_2^2 - \lambda\, log\, p_X(x) - \mu\, log\, p_H(\mathbf{h}).$$

$\lambda$ and $\mu$ are hyperparameters that should be chosen carefully to balance the prior knowledge with the observation. They are fixed during the entire sampling process. Generally, it should be possible to find a relatively good setting $\lambda$ and $\mu$ after training the score-based models. After that, they should not have to be changed when using the sampler.

The application of the sampler 108 uses two separate score-based networks 104 and 106 $[s_\theta, s_\phi]$. The score-function in the score-based models 104 and 106 is the gradient of the data distribution and the sampler 108 can be used to draw samples from the score-based models 104 and 106 using iterative methods such as Langevin dynamics or the Euler-Maruyama sampling method. These methods solve a reverse diffusion process, formulated by a stochastic differential equation. The forward diffusion process progressively diffuses a data point into random noise by gradually perturbing the data with more noise. The score-function arises in the reversal of this diffusion process, which is used to smoothly convert the correlated noise to samples of the data distribution. The score-based models 104 and 106 will serve as a prior on the data density of the data of interest and the target correlated noise respectively. This differs from existing sampling methods as it requires learning a prior on both the data of interest and the target correlated noise. The latter is useful in inverse problems that involve dependent noise (e.g. haze).

De-noising can be done by sampling from the posterior using the Euler-Maruyama sampling method described in the following algorithm:

$$\textbf{Require: } N, s_\theta, s_\phi, \lambda, \mu, \mathbf{y}$$

```
1   x̂₁ ~ π(x), ĥ₁ ~ π(h), Δt ← 1/N
2   for i = N − 1 to 0 do
3       t ← (i+1)/N
4       ŷₜ ~ p₀ₜ(yₜ|y)
5       x̂ₜ₋Δₜ ← x̂ₜ − λ(x̂ₜ − ŷₜ + ĥₜ)
6
7       ĥₜ₋Δₜ ← ĥₜ − μ(ĥₜ − ŷₜ + x̂ₜ)
8
9       x̂ₜ₋Δₜ ← x̂ₜ − f(t)x̂ₜΔt
10      x̂ₜ₋Δₜ ← x̂ₜ₋Δₜ + g(t)²s*_θ(x̂ₜ, t)Δt
11      z ~ N(0, I)
12      x̂ₜ₋Δₜ ← x̂ₜ₋Δₜ + g(t)√Δt z
13
14      ĥₜ₋Δₜ ← ĥₜ − f(t)ĥₜΔt
15      ĥₜ₋Δₜ ← ĥₜ₋Δₜ + g(t)²s*_φ(ĥₜ, t)Δt
16      z ~ N(0, I)
17      ĥₜ₋Δₜ ← ĥₜ₋Δₜ + g(t)√Δt z
18  end
    return: x̂₀
```

where $\lambda$ and $\mu$ and hyperparameters (discussed below), the functions $f(t)$ and $g(t)$ denote the standard Wiener process and symbolize the trajectory of random variables in a stochastic process and $\pi(\boldsymbol{x})$ and $\pi(\boldsymbol{h})$ are pre-defined noise distributions. More details on the Euler-Maruyama sampling method can be found in Song, Shen, Xing, & Ermon, 2021 "Solving Inverse Problems in Medical Imaging with Score-Based Generative Models" (ICLR Conference 2022).

Note that, in the algorithm, lines 14 - 17 are similar to lines 9 - 12 and used to solve the sampling process for the target correlated noise $\boldsymbol{h}$ in the same manner as for the data of interest $\boldsymbol{x}$.

It has been shown before that the Euler-Maruyama sampling method can be extended to a conditional sampler by adding a proximal optimization step. The data consistency steps in line 4 and 5 ensure that the samples generated ($\hat{\mathbf{x}}$) are consistent with the observed data $\mathbf{y}$. However, previous approaches are limiting as they assume a simple measured model $\mathbf{y} = \mathbf{x} + \mathbf{n}$ where the noise $\mathbf{n}$ is Gaussian distributed. Methods relying on this assumption are generally incapable of dealing with highly structured and correlated noise. The haze commonly found in cardiac imaging is a good example of a real-world scenario where these methods fail.

In contrast, the method shown above extends the sampling method with a separate noise model. Lines 1, 7 and 14-17 show the additional steps needed to incorporate the explicit correlated noise model $p_H(\mathbf{h})$ into the sampler. Intuitively, both $\mathbf{x}$ and $\mathbf{h}$ are sampled at the same time using the Euler-Maruyama method, while an additional data consistency step (line 7) ensures both $\mathbf{x}$ and $\mathbf{h}$ are agreeing with the measurement model in equation (1).

The samples generated ($\hat{\mathbf{x}} = \hat{\mathbf{x}}_0$) by the sampler 108 in Fig. 1 can then be used to generate the data of interest 110. Essentially, the output of the sampler 108 is the final sample of the iterative loop.

Furthermore, design of the prior distributions $p_X(\mathbf{x})$ and $p_H(\mathbf{h})$ is important for optimal de-hazing performance. The goal is to capture relevant features of the data of interest while still being able to generalize to unseen patterns in the data. For example, in the case of ultrasound, it is important to capture relevant ultrasound features while still being able to generalize to unseen anatomical features in the ultrasound data. To achieve this, the prior distributions can be factorized into multiple segments or patches. Each of these patches is de-noised individually to retain spatial independence. By design, this approach is less likely to overfit to anatomical structures.

The scale on which the segments are factorized can be chosen such that basic features (e.g., boundaries between tissues in ultrasound images) are present in the patches. At the same time, the patches should be small enough such that, for example, larger anatomical structures are not recognized. The exact size of the prior distribution depends on the particular data of interest and should be tuned according to the aforementioned criteria. It has been found that choosing a 50% overlap is suitable when extracting the patches and overlaying them with a rectangular window after the de-noising to reconstruct the data of interest.

Noise statistics can sometimes vary widely across different parts in observed data, especially in ultrasound imaging where correlated noise changes as a function of the depth of the ultrasound data. These differences can be captured implicitly in the noise prior distribution $p_H(\mathbf{h})$. However multiple improvements can be made to more explicitly capture the exact noise characteristics for each part in the image. For instance, multiple models can be trained on and applied to different depths. A simpler approach uses a single model for all segments in the image but weights ($\lambda$, $\mu$) the priors differently with the measurement depending on the depth. In regions with lower SNR (higher depth), it may be preferable to rely less on the observed data and more on the prior.

The way both priors are being weighted (using the hyperparameters $\lambda$ and $\mu$) in the MAP inference shown in equation (2) is not trivial and can have a big impact on the final performance of the de-noising process. In the case of the simplest forward model $\mathbf{y} = \mathbf{x} + \mathbf{n}$, there is only one prior which is balanced with the likelihood using parameter $\lambda$. Here $\lambda$ can be simply tuned to control the amount of denoising. In the case of the more complex model with the double priors shown in equation (1) an additional weighting parameter $\mu$ is introduced to balance the correlated noise prior $p_H(\mathbf{h})$. As will be appreciated, there is an intricate interplay between how these parameters are set and the resulting estimate of the data of interest. A Bayesian search algorithm can be employed to automatically find both hyperparameters for improved quality of the data of interest. It will be understood that other methods for arriving at the values for the hyperparameters can also be used (e.g. grid search methods).

A sampler 108 is used in the algorithm since it is "sampling" or drawing a point (i.e. image $\mathbf{x}$) from a data distribution conditioned on the observation (i.e. the measurement $\mathbf{y}$). Typically, methods used to solve inverse problems (including non-deep learning methods) do so in an iterative manner. However, the iterative algorithm does not necessarily have to be a sampler as some algorithms are not formulated in a probabilistic way. For example, one could use so-called solvers, instead of samplers. The subtle difference is that samplers have some randomness embedded in them, which allows them to draw samples from a distribution (and not just a deterministic point), while solvers that are not sampling just find the optimal solution deterministically (through gradient descent for instance). In fact the random components (line 11 and 16) could also be removed from the algorithm above and then it would not be a sampler, but find the most likely image.

The current signal model of equation (1) can be further extended with a measurement matrix A, which is commonly done in compressive sensing settings:

$$y = Ax + h + n \qquad (3)$$

In this case, $y$ is not only a corrupted but also undersampled version of $x$. The proximal update step (line 5) of the algorithm shown above can be rewritten to consider the measurement matrix in the conditional model as follows:

$$\widehat{x}_{t-\Delta t} \leftarrow \widehat{x}_t - \lambda A^T\left(A\widehat{x}_t - \widehat{y}_t + \widehat{h}_t\right) \qquad (4)$$

Similarly, the data consistency step (line 7) for h can be changed to incorporate the measurement matrix A:

$$\widehat{h}_{t-\Delta t} \leftarrow \widehat{h}_t - \lambda\left(\widehat{h}_t - \widehat{y}_t + A\widehat{x}_t\right) \qquad (5)$$

It will be appreciated that, with the extended version of the signal model in equation (3), more complex inverse problems can be solved where the measurement matrix can include subsampling, point-spread-functions or blurring kernels.

Of course, the signal model can be even further extended by to solve a non-linear function $y = \varphi(x) + h + n$. In this case, the forward operator (previously **A,** or even identity I, in the algorithm) is a non-linear function $\varphi(x)$ instead of a linear operator. As long as the non-linear function is differentiable, this new formulation of the inverse problem can be solved similarly.

The first and second score-based models can be learned from a mix of simulated, phantom and in-vivo data for generalizability. Two separate networks are trained for the data of interest and the correlated noise. Thus, two separate datasets are used for training. The first dataset consists of clean data that does not contain the target correlated noise. Secondly, a second dataset consists of the target correlated noise (e.g. ultrasound data containing only haze, without any tissue signal) and is used to learn the statistics of thee target correlated noise.

In ultrasound, it can be challenging to separate the noise component for learning the prior. Therefore, the noise prior is often trained on simulated and phantom data only. However, it is possible to extract hazy regions from in-vivo data and use them for training the noise prior.

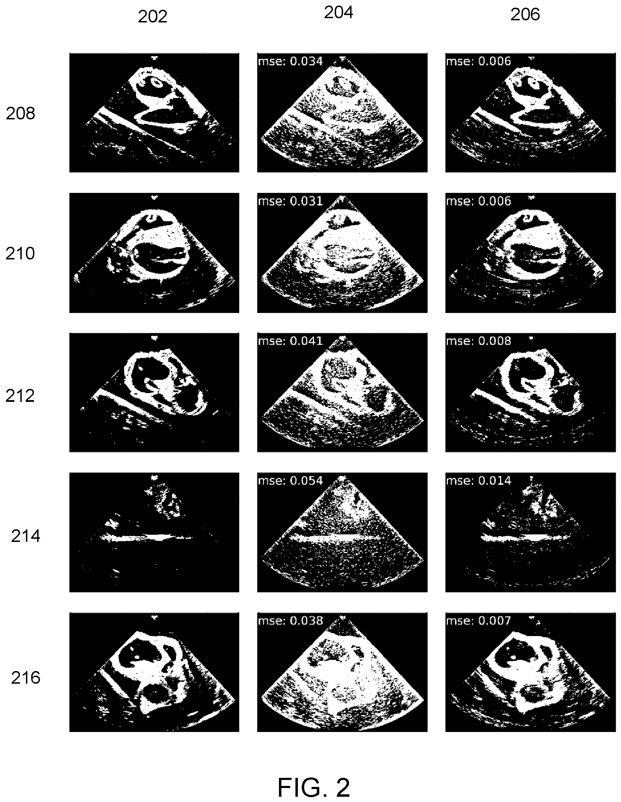

Fig. 2 shows the results for the methods described herein on cardiac ultrasound data. In particular, two score-based models, as described above, were trained on clean ultrasound images and on haze respectively. The models were used to estimate the data of interest (i.e. clean ultrasound images) from ultrasound images containing artificially added haze shown in column 204. The goal was to estimate the corresponding data of interest shown in column 202 (i.e. the ultrasound images before the haze was artificially added). The estimated ultrasound images are shown in column 206. Rows 208, 210, 212, 214 and 216 show various views of cardiac ultrasound images. As can be seen, the estimated images of column 206 have significantly less haze compared to the ultrasound images containing haze in column 204.

For the case of ultrasound, the priors can be learned in, and applied to, the image domain. However, this method is not limited to images only and can be applied anywhere in the signal path. For instance, the de-noising task can be performed on RF data (after beamforming) or even on the raw channel date itself. It is advised to squash the dynamic range of the RF data using methods such as companding to prepare the data for neural networks, which typically perform better in that case. Lastly, the application can be extended from 2D to 3D ultrasound data. The network can be applied to slices of the 3D data, or possibly more interesting to the data cube as a whole, capturing the relationship between dimensions in the prior distribution. Finally, the temporal dimension can be leveraged by learning the prior on a sequence of consecutive frames or condition the prior to the previous frame.

Medical images (e.g. from computed tomography (CT) and magnetic resonance imaging (MRI)) in general are known to often contain correlated noise. As such, two models as described above can also be trained for particular scenarios in medical imaging.

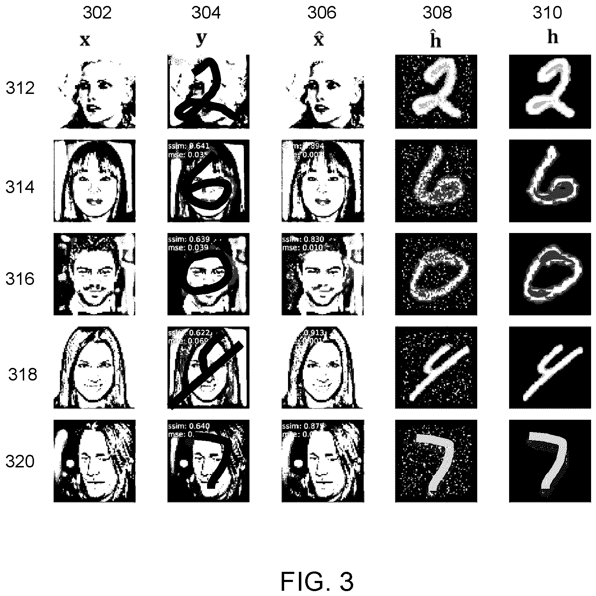

Although this method was initially designed for application of cardiac ultrasound, it may be applicable to any problem that involves de-noising and retrieval of underlying signals (i.e. data of interest) from measurements with highly dependent noise. As an example, the output of the method was used on natural images. The results are shown in Fig. 3. Column 302 shows clean images (i.e. data of interest) in the form of images of different people and column 304 shows the images with the target correlated noise. The target correlated noise comprises a hand-written reference number in different colors written over the image. For ease of illustration, the overlaid reference numbers are shown in black to make them visible.

Column 306 shows the estimated data of interest after using the de-noising approach of the invention, column 308 shows the estimated target correlated noise and column 310 shows the actual target correlated noise (i.e. the overlaid handwritten number). Of course, as two separate models are used, both an estimated data of interest can be found as well as an estimate of the target correlated noise. The methods were applied to five different images shown in rows 312, 314, 316, 318 and 320. In this case, the distributions were not factorized into segments, but inference was done on the image as a whole.

It is noted that score-based models have been introduced in many flavors and various names have been used. Any of the known score-based models will work with the methods described herein. A few examples include Score-based generative models, a.k.a.: diffusion models; denoising diffusion probabilistic modelling (DDPM) and score-based diffusion models.

Additionally, the Euler-Maruyama sampler was given as an example for the sampler above. Any sampling method for diffusion processes can work. More sophisticated samplers such as ALD, probability flow ODE, and Predictor-Corrector sampler can be used to further improve sample quality.

The skilled person would be readily capable of developing a processor for carrying out any herein described method. Thus, each step of a flow chart may represent a different action performed by a processor, and may be performed by a respective module of the processor.

As discussed above, the system makes use of processor to perform the data processing. The processor can be implemented in numerous ways, with software and/or hardware, to perform the various functions required. The processor typically employs one or more microprocessors that may be programmed using software (e.g., microcode) to perform the required functions. The processor may be implemented as a combination of dedicated hardware to perform some functions and one or more programmed microprocessors and associated circuitry to perform other functions.

Examples of circuitry that may be employed in various embodiments of the present disclosure include, but are not limited to, conventional microprocessors, application specific integrated circuits (ASICs), and field-programmable gate arrays (FPGAs).

In various implementations, the processor may be associated with one or more storage media such as volatile and non-volatile computer memory such as RAM, PROM, EPROM, and EEPROM. The storage media may be encoded with one or more programs that, when executed on one or more processors and/or controllers, perform the required functions. Various storage media may be fixed within a processor or controller or may be transportable, such that the one or more programs stored thereon can be loaded into a processor.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method for de-noising data (102) comprising data of interest and a target correlated noise, the method comprising:

   inputting the data into a first model (104) trained on the data of interest;
   inputting the data into a second score-based generative model (106) trained on a target correlated noise expected to be present in the data; and
   estimating the data of interest (110) based on the data and the outputs of the first model and the second score-based generative model.

2. The method of claim 1, wherein the first model is also a score-based generative model.

3. The method of claim 1 or 2, wherein estimating the data of interest comprises using the outputs of the first model and the second score-based generative model in a sampling algorithm configured to estimate the data of interest from the data by solving an inverse de-noising problem and applying the solution to the data.

4. The method of any of claims 1 to 3 wherein the data is undersampled relative to the data of interest by a sampling matrix and wherein the method comprises transforming the data to a size of the data of interest.

5. The method of claim 4, wherein the sampling matrix further comprises one or more of subsampling functions, point-spread functions and blurring kernels.

6. The method of any of claims 1 to 5, wherein the data is image data.

7. The method of any of claims 1 to 6, wherein the data is ultrasound image data.

8. The method of claim 7, wherein:

   a plurality of first models are applied to different depths of the ultrasound image data, wherein each first model is trained on the data of interest for a target depth in ultrasound image data; and/or
   a plurality of second score-based generative models are applied to different depths of the ultrasound image data, wherein each second score-based generative model is trained on a target correlated noise at a target depth expected to be present in ultrasound image data.

9. A computer program carrier comprising computer program code which, when executed on a processing system, cause the processing system to perform all of the steps of the method according to any of claims 1 to 8.

10. A system for de-noising data (102) comprising data of interest and a target correlated noise, the system comprising a processor (120) configured to:

   input the data into a first model (104) trained on the data of interest;
   input the data into a second score-based generative model (106) trained on a target correlated noise expected to be present in the data; and

estimate the data of interest (110) based on the data and the outputs of the first model and the second model.

**11.** The system of claim 10, wherein the first model is also a score-based generative model.

**12.** The system of claims 10 or 11, wherein estimating the data of interest comprises using the outputs of the first model and the second score-based generative model in a sampling algorithm configured to estimate the data of interest from the data by solving an inverse de-noising problem and applying the solution to the data.

**13.** The system of any of claims 10 to 12, wherein the data is image data.

**14.** The system of any of claims 10 to 13, wherein the data is ultrasound image data.

**15.** The system of claim 14, wherein:

a plurality of first models are applied to different depths of the ultrasound image data, wherein each first model is trained on the data of interest for a target depth in ultrasound image data; and/or
a plurality of second score-based generative models are applied to different depths of the ultrasound image data, wherein each second score-based generative model is trained on a target correlated noise at a target depth expected to be present in ultrasound image data.

FIG. 1

FIG. 2

FIG. 3

Europäisches
Patentamt

European
Patent Office

Office européen
des brevets

# EUROPEAN SEARCH REPORT

Application Number

EP 22 20 6335

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | JAY WHANG ET AL: "Solving Inverse Problems with a Flow-based Noise Model", ARXIV.ORG, CORNELL UNIVERSITY LIBRARY, 201 OLIN LIBRARY CORNELL UNIVERSITY ITHACA, NY 14853, 1 July 2021 (2021-07-01), XP081998862, | 1-3,6,7, 9-14 | INV. G06T5/00 |
| A | * first page to third page * * eighth page and ninth page * | 4,5,8,15 | |
| Y | Song Yang ET AL: "Generative Modeling by Estimating Gradients of the Data Distribution", , 29 October 2019 (2019-10-29), XP055870838, Retrieved from the Internet: URL:https://arxiv.org/pdf/1907.05600v2.pdf [retrieved on 2021-12-08] * page 2 - page 3 * * page 5 - page 6 * | 1-3,6,7, 9-14 | |
| A | KAWAR BAHJAT ET AL: "Stochastic Image Denoising by Sampling from the Posterior Distribution", 2021 IEEE/CVF INTERNATIONAL CONFERENCE ON COMPUTER VISION WORKSHOPS (ICCVW), IEEE, 11 October 2021 (2021-10-11), pages 1866-1875, XP034027902, DOI: 10.1109/ICCVW54120.2021.00213 [retrieved on 2021-11-08] * page 1866 - page 1867 * | 1-15 | TECHNICAL FIELDS SEARCHED (IPC) G06T |

The present search report has been drawn up for all claims

| Place of search | Date of completion of the search | Examiner |
|---|---|---|
| Munich | 10 July 2023 | Maier, Werner |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WHANG ; LEI ; DIMAKIS.** Solving Inverse Problems with a Flow-based Noise Model. *2021 Proceedings of the 38th International Conference on Machine Learning, PMLR 139*

- **SONG ; SHEN ; XING ; ERMON.** Solving Inverse Problems in Medical Imaging with Score-Based Generative Models. *ICLR Conference 2022,* 2021